# EUROPÄISCHE PATENTANMELDUNG

(11) **EP 1 170 811 A2**
(43) Veröffentlichungstag der Anmeldung: **09.01.2002**
(21) Anmeldenummer: 01115438.2
(22) Anmeldetag: 27.06.2001
(51) Int. Cl.: H01M 8/06, H01M 8/04

(54) **Brennstoffzellensystem und Verfahren zum Betreiben desselben**

(30) Priorität: 05.07.2000 DE 10032667
(71) Anmelder: XCELLSIS GmbH, 73230 Kirchheim/Teck-Nabern (DE)
(72) Erfinder: Derflinger, Monika, 73272 Neidlingen (DE); Haas, Isabel, 73230 Kirchheim (DE); Kaufmann, Lars, 73230 Kirchheim (DE)
(74) Vertreter: Kocher, Klaus-Peter Dipl.-Phys

(57) **Zusammenfassung**

Die Erfindung betrifft ein Brennstoffzellensystem mit einer Brennstoffzelleneinheit mit mindestens einer Brennstoffzelle und einem Gaserzeugungssystem zur Erzeugung eines wasserstoffreichen Mediums, welches zur Versorgung der Brennstoffzelleneinheit mit Wasserstoff vorgesehen ist, wobei bei einer einstufigen Oxidationseinheit stromauf vor der einzigen Stufe ein erster Abscheider zum Abscheiden von Wasser aus dem wasserstoffreichen Medium und zwischen erstem Abscheider und der Stufe ein Druckreduzierventil vorgesehen ist, oder daß bei einer mehrstufigen Oxidationseinheit stromauf vor der letzten Stufe der Oxidationseinheit ein erster Abscheider zum Abscheiden von Wasser aus dem wasserstoffreichen Medium und zwischen erstem Abscheider und der letzten Stufe ein Druckreduzierventil vorgesehen ist.

## Beschreibung

Die Erfindung betrifft ein Brennstoffzellensystem gemäß dem Oberbegriff des unabhängigen Anspruchs.

In einem Brennstoffzellensystem mit PEM-Brennstoffzellen, insbesondere in Systemen, in denen Wasserstoff zum Betreiben der Brennstoffzelle mittels eines Reformierungsprozesses gewonnen wird, spielt der Wasserhaushalt des Systems eine wichtige Rolle. Besonders bei einer mobilen Verwendung eines Brennstoffzellensystems ist das Mitführen von großen Wassermengen zur Befeuchtung des Systems ungünstig, und es wird angestrebt, Wasser aus dem System möglichst wieder zurück zu gewinnen. Ein solches System ist in der DE 197 07 814 C1 beschrieben. Dabei wird bei der elektrochemischen Reaktion von Wasserstoff und Sauerstoff in der Brennstoffzelle erzeugtes Wasser für den Reformierungsprozeß wieder verwendet.

Für den Reformierungsprozeß wird deionisiertes Wasser und ein kohlenstoff- und wasserstoffhaltiges Medium, etwa Methanol, gemischt, verdampft und in Wasserstoff und Kohlendioxid umgewandelt. Dieser Wasserstoff wird der Brennstoffzelle zugeführt, welche diesen zusammen mit Sauerstoff in einem katalytischen Prozeß in elektrische Energie und Wasser umwandelt.

Aus der WO 99/60646 A1 ist ein Brennstoffzellensystem bekannt, bei dem Wasser aus dem Kathoden-Abgasstrom und aus dem AnodenAbgasstrom der Brennstoffzelle gewonnen wird, indem Wasser aus den Abgasströmen auskondensiert und abgeschieden wird. Zwischen einer Reformierungseinheit und der Brennstoffzelle geschaltet ist eine Oxidationseinheit zur Oxidation von Kohlenmonoxid, in welche Wasser zur Reaktion und zur Kühlung des wasserstoffreichen Produktgases eingespritzt wird, sowie ein Kondensator, welcher den Wasserdampf aus dem wasserstoffreichen Produktgas entfernt und dieses vor dem Eintritt in die Brennstoffzelle weiter abkühlt.

Der Erfindung liegt die Aufgabe zugrunde, ein Brennstoffzellensystem mit einem verbesserten Wasserhaushalt anzugeben.

Diese Aufgabe wird bei einem Brennstoffzellensystem mit den Merkmalen des Anspruchs 1 und bei einem Verfahren zum Betreiben des Brennstoffzellensystems mit den Merkmalen des Anspruchs 8 gelöst.

Erfindungsgemäß ist bei einem Brennstoffzellensystem ein Gaserzeugungssystem zur Erzeugung eines wasserstoffreichen Mediums zur Versorgung der Brennstoffzelleneinheit mit Wasserstoff vorgesehen, wobei das Gaserzeugungssystem eine Oxidationseinheit und zwischen einem ersten Abscheider zum Abscheiden von Wasser aus dem wasserstoffreichen Medium und einer letzten Stufe der Oxidationseinheit ein Druckreduzierventil vorgesehen ist.

Der Vorteil ist, daß bei hohem Druck mehr Wasser durch den Abscheider aus dem wasserstoffreichen Medium abgetrennt werden kann, so daß eine verbesserte Wiedergewinnung des im System enthaltenen Wassers möglich ist. Ein weiterer Vorteil ist, daß die Medienströme im Bereich der Brennstoffzelleneinheit getrocknet werden, so daß die im System vorhandenen Komponenten vor einem Vollaufen mit Wasser besser geschützt sind.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figur zeigt:

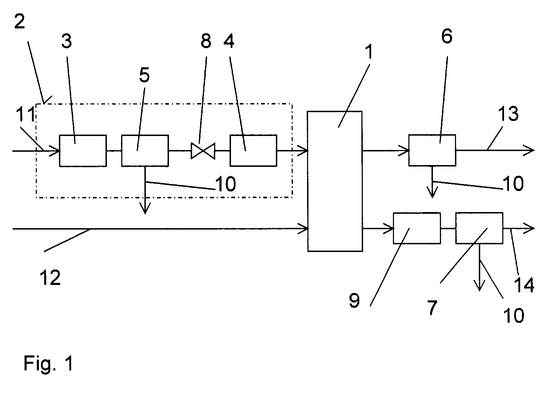

- Fig. 1: eine Prinzipdarstellung einer bevorzugten Vorrichtung zur Durchführung des Verfahrens.

Die Erfindung eignet sich besonders für Brennstoffzellensysteme in mobilen Einheiten wie etwa Brennstoffzellenfahrzeuge.

In Fig. 1 ist eine Prinzipdarstellung einer bevorzugten Anordnung eines Brennstoffzellensystems dargestellt. Das Brennstoffzellensystem weist eine Brennstoffzelleneinheit 1 auf mit mindestens einer Brennstoffzelle mit Anodenraum und Kathodenraum, welche durch eine protonenleitende Membran getrennt sind.

Stromauf der Brennstoffzelle befindet sich eine Anodenzuführleitung 11 zur Zufuhr eines wasserstoffreichen Mediums zum Anodenraum und eine Kathodenzuführleitung 12 zur Zufuhr eines sauerstoffreichen Mediums zum Kathodenraum der Brennstoffzelleneinheit 1. In der Anodenzuführleitung 11 ist ein Gaserzeugungssystem 2 angeordnet, von dem nur ein Ausschnitt in der Figur dargestellt ist. Im Gaserzeugungssystem 2 wird aus einem wasserstoffhaltigen Medium ein wasserstoffreiches Medium gewonnen, welches als Brennstoff für die Brennstoffzelleneinheit 1 dient. Das Gaserzeugungssystem 2 enthält zumindest einen Reformierungsreaktor und eine Gasreinigung, die dazu vorgesehen ist, unerwünschtes Kohlenmonoxid aus dem Reformat zu entfernen.

Die Gasreinigung weist eine mindestens einstufige Oxidationseinheit auf, in der Kohlenmonoxid zu Kohlendioxid oxidiert wird. In der Figur sind zwei Stufen 3, 4 einer mehrstufigen Oxidationseinheit dargestellt. Zwischen der letzten Stufe 4 und der vorletzten Stufe 3 der Oxidationseinheit ist ein erster Abscheider 5 vorgesehen. Bei einer einstufigen Oxidationseinheit wäre der erste Abscheider stromauf vor der einzigen Stufe der Oxidationseinheit angeordnet.

Zwischen dem ersten Abscheider 5 und der letzten Stufe 4 der mehrstufigen Oxidationseinheit ist ein Druckreduzierventil vorgesehen, so daß das wasserstoffreiche Medium in der Anodenzuführleitung 11 in den vorangehenden Stufen der Oxidationseinheit und dem ersten Abscheider 5 einem höheren Druck p1 ausgesetzt ist als in oder nach der letzten Stufe 4 der Oxidationseinheit. Bei höherem Druck ist der Sättigungsdampfdruck von Wasser geringer als bei niedrigerem Druck. Dies führt dazu, daß im wasserstoffreichen Medium weniger Wasserdampf, aber dafür mehr flüssiges Wasser und/oder Wassertröpfchen mitgeführt werden.

Der erste Abscheider 5, der stromauf der Brennstoffzelleneinheit 1 als Wasserseparationseinheit dient, stellt im wesentlichen einen Behälter dar, in dem flüssiges Wasser sowie Wassertropfen aus dem Medienstrom abgetrennt werden. Dies kann ohne weitere Maßnahmen wie Abkühlen des Mediums erfolgen. Es kann jedoch auch ein Reformatkühler zum Kühlen vorgeschaltet sein. Dagegen wird bei einem Kondensator ein feuchtes Medium gekühlt, so daß im Medium enthaltenes dampfförmiges Wasser auskondensiert, das dann im nachgeschalteten Abscheider abgetrennt wird..

Stromab der Brennstoffzelleneinheit 1 ist ein zweiter Abscheider 6 in einem Anodenabgasstrom 13 angeordnet und entfernt aus diesem das mitgeführte Wasser. Dieses wird über eine Abführleitung 10 aus dem Abscheider 6 abgeführt.

Ein dritter Abscheider 7 ist in einem Kathodenabgasstrom 14 angeordnet. Stromauf des dritten Abscheiders 7 ist ein Kondensator 9 vorgesehen, um das Kathodenabgas abzukühlen. Ein Teil des darin mitgeführten Wasserdampfs kondensiert und kann im dritten Abscheider 7 vom Kathodenabgas abgetrennt werden. Das gesammelte Wasser wird über eine weitere Abführleitung 10 aus dem Abscheider 7 abgeführt.

Vorteilhaft ist, das in den Abscheidern 5, 6, 7 gesammelte Wasser in einen gemeinsamen Sammelbehälter abzuführen und dem Gaserzeugungssystem 2 und/oder der Brennstoffzelleneinheit 1 und/oder anderen Komponenten des Brennstoffzellensystems wieder verfügbar zu machen. Dazu kann auch vorgesehen sein, das rückgewonnene Wasser vor der Zurverfügungstellung zu reinigen.

Besonders bevorzugt wird eine Oxidationseinheit mit vier Stufen verwendet, bei dem der erste Abscheider 5 zwischen der dritten und vierten Stufe der Oxidationseinheit vorgesehen ist. Die Oxidationseinheit ist besondere bevorzugt eine Einheit zur selektiven Oxidation von Kohlenmonoxid.

## Patentansprüche

1. Brennstoffzellensystem mit einer Brennstoffzelleneinheit
(1) mit mindestens einer Brennstoffzelle und einem Gaserzeugungssystem (2) zur Erzeugung eines wasserstoffreichen Mediums, welches zur Versorgung der Brennstoffzelleneinheit mit Wasserstoff vorgesehen ist, wobei das Gaserzeugungssystem (2) eine Oxidationseinheit zum Umwandeln von Kohlenmonoxid in Kohlendioxid aufweist, und wobei stromauf der Brennstoffzelleneinheit (1) eine Wasserseparationseinheit (5) zum Entfernen von Wasser aus dem wasserstoffreichen Medium vorgesehen ist,
**dadurch gekennzeichnet,**
**daß** bei einer einstufigen Oxidationseinheit stromauf vor der einzigen Stufe ein erster Abscheider (5) zum Abscheiden von Wasser aus dem wasserstoffreichen Medium und zwischen erstem Abscheider (5) und der Stufe ein Druckreduzierventil (8) vorgesehen ist, oder daß bei einer mehrstufigen Oxidationseinheit stromauf vor der letzten Stufe (4) der Oxidationseinheit ein erster Abscheider (5) zum Abscheiden von Wasser aus dem wasserstoffreichen Medium und zwischen erstem Abscheider (5) und der letzten Stufe (4) ein Druckreduzierventil (8) vorgesehen ist.

2. Brennstoffzellensystem nach Anspruch 1,
**dadurch gekennzeichnet,**
**daß** die Oxidationseinheit (3, 4) vierstufig aufgebaut ist.

3. Brennstoffzellensystem nach Anspruch 1,
**dadurch gekennzeichnet,**
**daß** stromab der Brennstoffzelleneinheit (1) in einem Anodenabgasstrom (13) ein zweiter Abscheider (6) zum Abscheiden von Wasser aus dem Anodenabgasstrom (13) vorgesehen ist.

4. Brennstoffzellensystem nach Anspruch 1,
**dadurch gekennzeichnet,**
**daß** stromab der Brennstoffzelleneinheit (1) in einem Kathodenabgasstrom (14) ein dritter Abscheider (7) zum Abscheiden von Wasser aus dem Kathodenabgasstrom (14) vorgesehen ist.

5. Brennstoffzellensystem nach Anspruch 4,
**dadurch gekennzeichnet,**
**daß** zwischen Brennstoffzelleneinheit (1) und drittem Abscheider (7) ein Kondensator (9) zum Kondensieren von Wasserdampf aus dem Kathodenabgasstrom (14) vorgesehen ist.

6. Brennstoffzellensystem nach Anspruch 1,
**dadurch gekennzeichnet,**
**daß** der erste Abscheider (5) zwischen der dritten und der vierten Stufe der Oxidationseinheit (3, 4) vorgesehen ist.

7. Brennstoffzellensystem nach Anspruch 1,
**dadurch gekennzeichnet,**
**daß** das Wasser aus erstem und/oder zweitem und/oder drittem Abscheider (5, 6, 7) einem Wasserreservoir zuführbar ist.

8. Verfahren zum Betreiben eines Brennstoffzellensystems nach Anspruch 1,
**dadurch gekennzeichnet,**
**daß** Wasser aus einem wasserstoffreichen Medium in einer Anodenzuführleitung (11) im Bereich eines ersten Drucks (p1) abgeschieden wird, wobei der erste Druck (p1) des wasserstoffreichen Mediums höher ist als der Druck, mit dem das wasserstoffreiche Medium in die Brennstoffzelleneinheit (1) eingeleitet wird.

9. Verfahren nach Anspruch 8,
**dadurch gekennzeichnet,**
**daß** flüssiges Wasser aus einem Anodenabgasstrom (13) abgetrennt wird.

10. Verfahren nach Anspruch 8,
**dadurch gekennzeichnet,**
**daß** flüssiges Wasser aus einem Kathodenabgasstrom (13) abgetrennt wird.

11. Verfahren nach Anspruch 10,
**dadurch gekennzeichnet,**
**daß** der Kathodenabgasstrom (13) vor dem Abscheiden des Wassers mit einem Kondensator (9) abgekühlt wird.
